# EUROPEAN PATENT SPECIFICATION

(11) **EP 2 209 329 B1**
(45) Date of publication and mention of the grant of the patent: **14.03.2012**
(21) Application number: 09150613.9
(22) Date of filing: 15.01.2009
(51) Int. Cl.: H04W 8/20, H04W 12/08, H04L 29/06

(54) **Method and apparatus for managing mobile device parameters**
Verfahren und Vorrichtung zur Verwaltung von Parametern eines mobilen Endgerätes
Procédé et appareil de gestion de paramètres d'un dispositif mobile

(43) Date of publication of application: 21.07.2010
(73) Proprietor: NTT DoCoMo, Inc., Tokyo (JP)
(72) Inventor: Zugenmaier, Alf, 81241, Munich (DE)
(74) Representative: Betten & Resch

(56) References cited:
- EP-A- 1 104 975
- GB-A- 2 379 134
- "3rd Generation Partnership Project; Technical Specification Group Services and System Aspects; 3GPP System Architecture Evolution (SAE): Security Architecture; (Release 8)" 3GPP TS 33.401 V8.2.1, SOPHIA-ANTIPOLIS, FR, no. version 8.2.1, 1 December 2008 (2008-12-01), pages 1-58, XP007908831 Sophia Antipolis

## Description

### FIELD OF THE INVENTION

The present invention relates to a method and an apparatus for parameter handling.

### BACKGROUND OF THE INVENTION

In mobile systems the so-called non-access stratum (NAS) is a functional layer which runs between the user equipment (UE) and the core network (CN). The layer supports traffic and signaling messages between the core network and the user equipment.

For maintaining security there is provided a so-called "security context" which consists of several parameters like keys or counters which protect the signaling which involves the non-access stratum. These security context parameters are in prior art mobile systems negotiated between the mobile device and the core network, when switching on (booting) the user equipment (the mobile device). However, since establishing such a parameter set as a security context takes time when switching on the mobile device, it was decided by the standardization body that such a security context should be stored in a non-volatile memory on the side of the mobile phone. More concretely, *3GPP TS 33.401* defines the use of a NAPS security context (NSC) file for being stored in a persistent storage on the UMTS subscriber identification module (USIM). If no file for storing the NSC exists in the USIM (in case of an old version USIM) the NSC should be stored in the non-volatile and non-removable memory of the ME. Using the stored security context it becomes unnecessary to re-negotiate the security context when switching on the mobile phone.

With the now envisaged standard, however, the storage of the security context in a non-volatile memory gives rise to certain problems. This is because for modern devices as recent as the ones in conformity with the security specification of release 8 of the 3GPP standard it is mandatory that the security context parameters are stored in the universal subscriber identification module (USIM) if there is a specific file for that purpose provided in the USIM. If no such file is provided in the USIM (for previous generation USIMs), the security context parameters should be stored in the non-volatile memory of the mobile phone (the mobile equipment ME).

Therefore, one basically has to distinguish between two cases, a first one where the USIM is in accordance with the new standard and has a file for storing the security context parameters, and a second case where the USIM is an older one and has no such file. In the latter case the security context parameters have to be stored in the non-volatile memory of the mobile phone.

This distinguishing of the two cases, however, poses severe burdens for the manufacturers of mobile phones who have to test a mobile phone after manufacturing. The reason for this is as follows.

During the testing procedure there has to be executed a test run where the mechanisms and algorithms which involve the non-access stratum and their corresponding parameters are to be tested. All operations which involve a NAS access have to undergo a test run.

If, however, the parameters (the security context) used during such operations can potentially be stored in two different locations, then such a (full) test run has to be executed twice, once in order to test the reading and writing of the security context to the non-volatile memory of the mobile phone itself, and once using the file of USIM.

In other words, the necessary operations and consequently the necessary time for testing of a mobile phone before shipping are just doubled if the security context can potentially be stored in two different locations, once in the mobile phone itself and once in the USIM. This is because for performing a test the mobile phone has to evaluate the correct functioning of both possible cases, the one where the NSC is stored in the USIM and the one where the NSC is stored in the non-volatile memory of the ME.

One possible solution to this problem would be to just ignore the fact that the USIM might be one of the newer type and to just write and store the NAS security context always to the non-volatile memory of the mobile device. With such a solution one would then build a mobile phone which just ignores the fact that one may have a USIM in accordance with the newer standard. Of course such a solution would be not standards compliant. Moreover, this may lead to an outdated security context stored on the USIM since any updates of the security context would only be stored to the non-volatile memory of the mobile device and not to the USIM,

In view of these disadvantages it would therefore be desirable if a mechanism could be provided which is fully standards compliant but avoids such a double testing procedure as explained before.

UK Patent Application GB-A-2 379134 discloses a radiotelephone which comprises a processor and non-volatile memory, and is arranged to store in (write into) the non-volatile memory information concerning at least one transmitter/base station with which the radiotelephone has communicated. This may allow the radiotelephone to later read the stored information and use it to search for signals from the stored transmitter/base stations in response to a power up condition. Information on the transmitter/base station may comprise identity, signal timing, clock drift rate and modulated code information. Stored information may also be compared to an age threshold and information is disregarded when the threshold is exceeded.

Patent Application EP-A-1104975 discloses a method for cell selection of an asynchronous mobile station in an asynchronous mobile communication system including an asynchronous mobile station, an asynchronous radio network, in case the asynchronous mobile communication system is interlocked with a core network, includes the steps of: storing information related to the core network transmitted from the asynchronous radio network in a memory or a user subscriber identity module (USIM) of the asynchronous mobile station before power-off of the asynchronous mobile station of the asynchronous mobile station; at power-on of the asynchronous mobile station, determining what type of the core network is interlocked by analyzing the information of the core network; beginning any one of a global system for mobile communication (GSM) cell procedure and an American national standards institute (ANSI) cell procedure; finding a cell suitable for providing a service, based on a type of the core network that was determined; and performing a location registration of the found cell.

### SUMMARY OF THE INVENTION

The present invention is defined in the independent claims. The dependent claims define particular embodiments of the invention. during further operation of said mobile phone, using the set of parameters which are stored in the volatile memory of said mobile device for communication with said network and for updating said parameters, wherein if said parameters are updated the updated parameters are again stored in said volatile memory;
after a shutdown request, storing the set of parameters onto the non-removable non-volatile memory of said mobile device or, if the subscriber identification module is configured to store said set of parameters in a prescribed location, storing them into said prescribed location of said subscriber identification module, so that while said mobile device is in a switched-off state, said set of parameters is stored in said subscriber identification module or, if the subscriber identification module is not configured to store said set of parameters in a prescribed location, said set of parameters is stored in the non-removable non-volatile memory of said mobile device.

With this approach there can be provided a standard compliant mobile device operation while still the testing of such a mobile device becomes much easier than if the two use cases (subscriber identification module is configured to store the parameters or not) had to be tested. By checking whether the subscriber identification module is configured to store the parameters, and then if yes by copying them from the non-volatile memory to the volatile memory or otherwise from the non-volatile memory of the mobile device to the volatile memory, it becomes possible to have the need to distinguish the two use cases only in the boot and the shutdown phase. This makes testing of a UE before shipping much easier.

According to one embodiment said set of parameters is one or more of the following:
a set of security parameters which secure the communication between a mobile device and the network to which the mobile device is connected; or
a set of mobility management parameters.

This embodiment gives two possible use cases of the principles of the present invention.

According to one embodiment the method further comprises:
after having copied the parameters to the volatile memory of the mobile device, deleting the parameters from the location in the non-volatile memory from which they have been copied.

This avoids that invalid parameters remain in the non-volatile memory which might then be used after e.g. a power failure which might prevent the storing of the updated parameters to the non-volatile memory.

According to one embodiment the method further comprises:
after having copied the parameters to the volatile memory of the mobile device, setting an indicator or a flag which indicates that the parameters stored in the location from where they were copied to the volatile memory of the mobile device are invalid.

This is an alternative solution of how to prevent the maintaining of outdated parameters in the non-volatile memory.

According to one embodiment the method further comprises:
after having copied the parameters from the volatile memory of the mobile device to either the non-volatile memory of said mobile device or, if the subscriber identification module is configured to store said set of parameters in a prescribed location, to said subscriber identification module:
   ensuring that a flag or indicator which indicates whether the parameters stored in the non-volatile memory of the mobile device of the subscriber identification module indicates the parameters stored therein as being valid.

This makes sure that the indicator indicating the validity of the parameters which may have been set to invalid after copying them into the volatile memory is again set to valid after the updated parameters are stored to the non-volatile memory during shutdown phase.

According to one embodiment the method further comprises:
generating a prescribed location for storing the parameters in the non-volatile memory of said mobile device, if a check whether such a prescribed location in the subscriber identification module and in the non-volatile memory of said mobile device exists is negative.

This takes into account the possibility an initial state where the subscriber identification module is not configured to store the parameters and the non-volatile memory of the mobile device also has not yet a location for storing such parameters.

According to one embodiment the method further comprises:
if after switching on said mobile device it is detected that no parameters are stored in said subscriber identification module and the non-volatile memory of said mobile device, negotiating parameters between said mobile device and the network to which it is connected so that the thus negotiated parameters can be used during operation of said mobile device and before shutdown are stored on the non-volatile memory of said mobile device or, if the subscriber identification module is configured to store said set of parameters in a prescribed location, in said subscriber identification module.

This takes into account the possibility of a power failure before correct saving of the updated parameters into the non-volatile memory. In this case the newly generated parameters can then be used.

According to one embodiment the method further comprises:
if after switching on said mobile device it is detected that the parameters stored in said subscriber identification module and/or the non-volatile memory of said mobile device are marked as invalid by a flag or an indicator, negotiating parameters between said mobile device and the network to which it is connected so that the thus negotiated parameters can be used during operation of said mobile device and before shutdown are stored on the non-volatile memory of said mobile device or, if the subscriber identification module is configured to store said set of parameters in a prescribed location, in said subscriber identification module.

This also takes into account the possibility of a power failure before correct saving of the updated parameters into the non-volatile memory. In this case the newly generated parameters can then be used.

According to one embodiment there is provided a mobile device configured to handle a set of parameters which is used in the communication between a mobile device and the network to which the mobile device is connected, wherein said mobile device comprises a non-removable non-volatile memory and further a removable non-volatile memory, said removable non-volatile memory being a subscriber identification module which either is configured to store said set of parameters in a prescribed location or is not configured to store said set of parameters in a prescribed location, said mobile device comprising:
a module for, when said mobile device is switched on, copying the set of parameters which are stored in either the subscriber identification module or
the non-removable non-volatile memory of said mobile device from there to the volatile memory of said mobile device;
a module for, during further operation of said mobile phone, using the set of parameters which are stored in the volatile memory of said mobile device for communication with said network and for updating said parameters, wherein if said parameters are updated the updated parameters are again stored in said volatile memory;
a module for, after a shutdown request, storing the set of parameters onto the non-removable non-volatile memory of said mobile device or, if the subscriber identification module is configured to store said set of parameters in a prescribed location, storing them into said prescribed location of said subscriber identification module, so that while said mobile device is in a switched-off state, said set of parameters is stored in said subscriber identification module or, if the subscriber identification module is not configured to store said set of parameters in a prescribed location, said set of parameters is stored in the non-removable non-volatile memory of said mobile device.

In this way a mobile device in accordance with an embodiment of the invention can be implemented.

According to one embodiment said set of parameters is one or more of the following:
a set of security parameters which secure the communication between a mobile device and the network to which the mobile device is connected; or a set of mobility management parameters.

According to one embodiment the mobile device further comprises:
a module for, after having copied the parameters to the volatile memory of the mobile device, deleting the parameters from the location in the non-volatile memory from which they have been copied.

According to one embodiment the mobile device further comprises:
a module for, after having copied the parameters to the volatile memory of the mobile device, setting an indicator or a flag which indicates that the parameters stored in the location from where they were copied to the volatile memory of the mobile device are invalid.

According to one embodiment the mobile device further comprises:
a module for performing, after having copied the parameters from the volatile memory of the mobile device to either the non-volatile memory of said mobile device or, if the subscriber identification module is configured to store said set of parameters in a prescribed location, to said subscriber identification module, the following operations:
   ensuring that a flag or indicator which indicates whether the parameters stored in the non-volatile memory of the mobile device of the subscriber identification module indicates the parameters stored therein as being valid.

According to one embodiment the mobile device further comprises:
a module for, if a check whether a prescribed location for storing the parameters in the subscriber identification module and in the non-volatile memory of said mobile device is negative, generating such a prescribed location in the non-volatile memory of said mobile device.

According to one embodiment the mobile device further comprises:
a module for, if after switching on said mobile device it is detected that no parameters are stored in said subscriber identification module and the non-volatile memory of said mobile device, negotiating parameters between said mobile device and the network to which it is connected, so that the thus negotiated parameters can be used during operation of said mobile device and before shutdown are stored on the non-volatile memory of said mobile device or, if the subscriber identification module is configured to store said set of parameters in a prescribed location, in said subscriber identification module.

According to one embodiment the mobile device further comprises:
a module for, if after switching on said mobile device it is detected that the parameters stored in said subscriber identification module and/or the non-volatile memory of said mobile device are marked as invalid by a flag or an indicator, negotiating parameters between said mobile device and the network to which it is connected, so that the thus negotiated parameters can be used during operation of said mobile device and before shutdown are stored on the non-volatile memory of said mobile device or, if the subscriber identification module is configured to store said set of security parameters in a prescribed location, in said subscriber identification module.

According to one embodiment there is provided a computer program comprising computer program code which when being executed on a computer enables said computer to perform a method in accordance with one of the embodiments of the invention.

### DESCRIPTION OF THE DRAWINGS

Fig. 1 schematically illustrates the configuration of a user equipment.
Fig. 2 schematically illustrates a flowchart of an operation of an embodiment of the invention during boot phase.
Fig. 3 schematically illustrates a flowchart of an operation of an embodiment of the invention during shutdown phase.

### DETAILED DESCRIPTION

In accordance with one embodiment of the invention there is provided a mechanism for parameter handling (the parameters may be e.g. security context parameters or mobility management parameters) which is standard compliant and which avoids the necessity of double testing. In one embodiment the relevant actions to store the security context to the non-volatile memory is performed only during the shutdown phase, in other words when switching off the mobile device. The updating and usage of the security context during operation of the mobile device, however, is carried out while the security context is stored in the volatile memory of the mobile device.

This becomes possible by loading the security context to the volatile memory of the mobile device when switching on the mobile device, in other words during the boot-phase of the mobile device.

Then, once the security context has been loaded to the volatile memory it can be used and updated regularly in accordance with the NAS operations performed during the usage of the mobile phone, and when switching off the mobile phone the security context is again stored to the non-volatile memory from which it has been loaded during the boot-phase.

In this manner the distinction between the two cases, either a new USIM with a specific file for the NAS security context being used or an old one without such a file and the need to write the security context to the non-volatile memory of the mobile phone, is limited to the boot phase and the shutdown phase of the mobile phone.

In other words, according to one embodiment there is used a Boot-phase-shutdown-phase approach (hereinafter also referred to as BS approach). In the BS-approach, the extra complexity occurs only during boot phase and shutdown phase of the UE.

According to one embodiment during boot phase, the UE checks whether the USIM is configured to store the NAS security context. This can be done by checking if the file or directory for storing the NAS security context exists in the USIM, and if the result is yes, then the contents of the directory or the file is moved to the volatile memory of the UE. Otherwise, the UE checks for existence of this data in its non-volatile memory, and copies it into volatile memory accordingly if it has been found in the non-volatile memory. In other words, it is checked whether the USIM is configured to store the NSC in a prescribed location, and if yes, the NSC is copied to the volatile memory of the UE. If no, it is checked whether the prescribed location (file or directory) is present in the non-volatile memory of the UE, and if yes, the content is copied to the volatile memory of the UE.

During shutdown, an operation into the opposite direction is performed. More particularly, the UE checks if the file or directory for storing the NSC exists in the USIM or in the UE and, if it exists in the USIM, it copies the NSC contents from the volatile memory into the USIM, otherwise, the contents are saved to the non-volatile memory of the UE.

Such an approach has quite significant advantages compared with performing all write or read operations on the non-volatile memory of the UE or the USIM. This becomes apparent if one considers the consequences which such an approach has on the testing procedure before shipping the mobile phone.

Such an approach requires much less testing of the UE equipment than an implementation that has to be tested for correctly checking existence of the NSC file whenever the parameters of the security context are updated. This would mean that tests would have to check the correct storing of the parameters for two different use cases depending on the nature of the US111/I, thus doubling the number of test cases.

Of course the BS approach requires more testing than another approach which would e.g. just ignore the USIM file for the security context as described before. On the other hand, if there were old data stored on the USIM, and ignored by the UE, then if the USIM is inserted into a standards compliant terminal, it would try to reuse the old parameters, which would be rejected by the network.

Moreover, the ignoring of the USIIVI file would lead to some security problems. For example, assume that a new standard-conformant USIM is used in a standard conformant terminal. Then the USIM is moved to a non-standard-conformant terminal which does not write NSC updates to the USIM but only to the non-volatile memory of the terminal. If then during operation the NSC is updated (e.g. by advancing the NAS counter which is a parameter of the NSC), the USIf1lI contains outdated security parameters. If the USIM is then moved back to a standard-compliant terminal it contains old counters, and therefore a replay attack would be possible.

Therefore the BS-approach enhances security and will also allow the benefits of faster network, access after plastic roaming (insertion of USIM into a different mobile device or exchange of a USIM of a mobile device with a different one).

The BS approach according to the described embodiment therefore also ensures that there is never any outdated context on the USIM.

Further embodiments will now be described referring to the Figures.

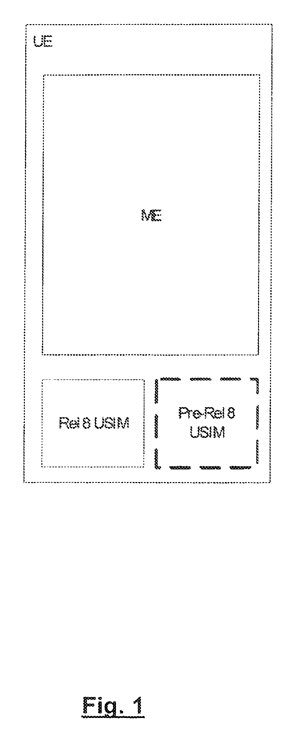

Fig. 1 illustrates the configuration of a user equipment (UE) which consists of a mobile equipment (ME) such as a mobile phone and a universal identification subscriber module (USIM). As indicated the USIM may be either one according to the new standard *3GPP TS 33.401* Release 8 (including the NSC file) as indicated by the solid box, or pre-Release 8 (not containing NSC file) as indicated by the dashed box in Fig. 1.

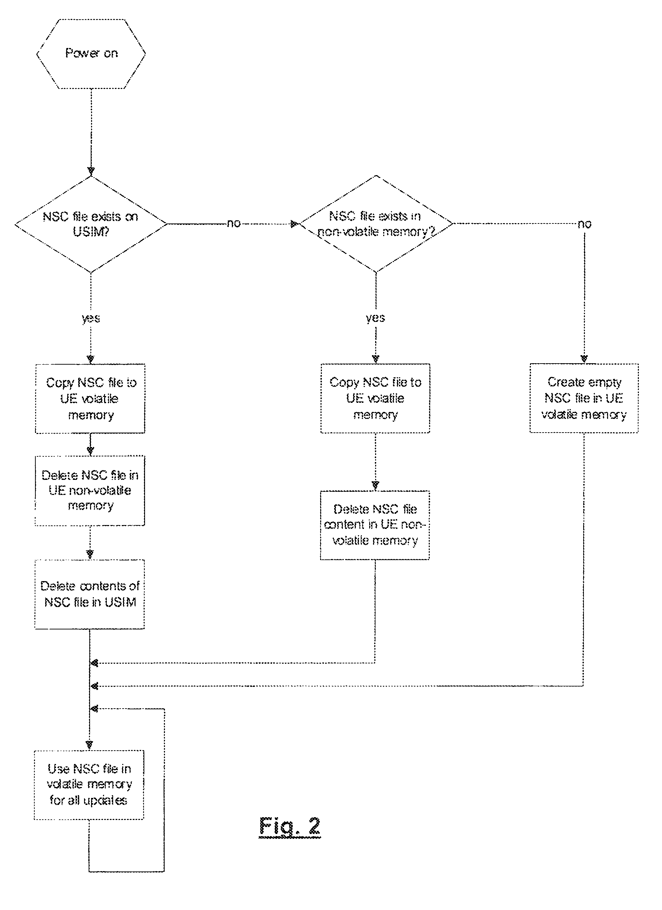

The user equipment UE according to one embodiment is configured to operate in accordance with the flowchart shown in Fig. 2 which will now be explained in the following.

In one embodiment the approach according to an embodiment of the invention illustrated in Fig. 2 may be summarized as follows. During power on cycle there is detected the presence of an NSC file and relevant data is moved to the volatile memory of the UE.

Such an embodiment is illustrated in somewhat more detail in Fig. 2. After switching on power there is checked whether there exists a file for the NAS security context NSC in the USIM. If this is the case the file is copied to the volatile memory of the UE. Then the contents of the NSC file in the UE non-volatile memory are deleted and in a second step also the contents of the NSC file in the USIM are deleted. With these two steps it can be ensured that there is no security context stored anymore in the UE's non-volatile memory or in the USIM. This is because the NSC stored therein could become outdated when the NSC which has been copied into the volatile memory becomes updated during NAS operations which are performed during the usage of the UE. Therefore it is preferable to delete the NSC content in the UE non-volatile memory and in the USIM after the NSC has been copied to the volatile memory of the ME.

Another possibility to avoid the usage of outdated security context without deleting the NSC in the UE non-volatile memory and in the USIM could be to mark the security context therein as invalid by setting a flag or indicator which has a corresponding meaning. In one embodiment this may be achieved by setting the parameter eKSI to the value 111 which has the effect that the security context stored in the UE non-volatile memory or in the USIM will be regarded as invalid.

This has then also the effect that if during operation a power loss occurs which prevents the correct saving of the updated security context, then the usage of the old outdated security context still stored in the UE non-volatile memory or in the USIM is prevented. In case of switching on the power again this would then have the effect that a new security context would be generated instead of using the stored one.

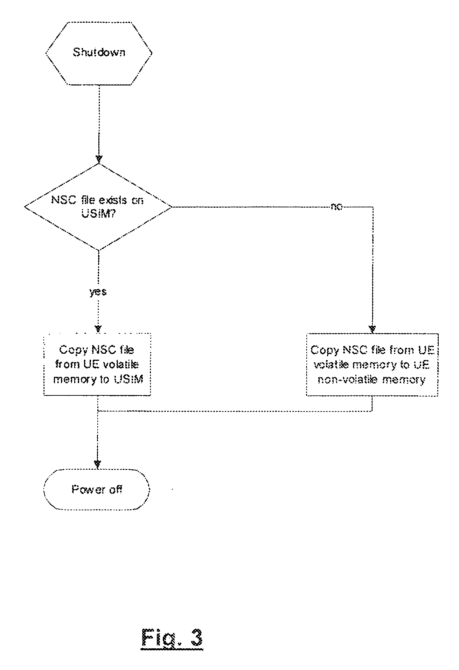

But referring back now to Fig. 2, once the NSC in the UE non-volatile memory and in the USIM have been deleted, the NSC file stored in the volatile memory can be used for all operations and updates involving the NAS security context NSC. This continues until the UE will be switched off, an operation which will be explained later in connection with Fig. 3.

Returning back to Fig. 2, however, it will now be explained what happens if the check whether a NSC file exists in the USIM has a negative result. In this case it is checked whether a NSC file exists in the non-volatile memory of the UE. If yes, the NSC file is copied from the non-volatile memory of the UE to the volatile memory of the UE. Then the NSC file in the non-volatile memory of the UE is deleted, as was explained already before. Alternatively, as also explained before, a flag or indicator may be set which marks the NSC stored in the non-volatile memory of the UE as invalid. Thereafter the NSC file stored in the volatile memory can be used for all operations and updates involving the NAS security context NSC. This continues until the UE will be switched off, an operation which will be explained later in connection with Fig. 3.

Now again returning to Fig. 2, the case will be explained where the check whether a NSC file exists in the non-volatile UE memory has a negative result. In this case such an (empty) file is created. This file can then be used for all further operations involving the NAS security context and its updates, as in the other cases.

If the file is empty initially, in one embodiment at first step a valid security context has to be generated. This security context can then be e.g. directly written into the non-volatile memory of the UE and used for updates. When the UE is to be shut down it may be saved into the empty file in the UE's non-volatile memory, as will be explained in connection with Fig. 3.

The approach during the shutdown phase according to one embodiment may be summarized as follows. The UE saves the NAS security context into the non volatile memory (either in the USIM or in the UE, if this file doesn't exist in the USIM).

According to one embodiment this may be performed as illustrated in Fig. 3 which will now be explained. After the shutdown command (e.g. due to pressing the off switch of the UE) it is checked whether a NSC file (or directory) for storing the NAS security context exists in the USIM. If yes, then the NSC of the volatile memory of the UE is copied into the corresponding location at the USIM. If the check result is negative this means that the USIM is an old one which has no file or directory for storing the NSC. In this case the NSC file of the volatile memory of the UE is copied into the non-volatile memory of the UE to the location where the NSC should be stored. In this manner the updated security context is then again stored onto either the USIM (if the USIM is configured to store the NSC) or onto the non-volatile memory of the UE, as required by the standard. During operation of the UE (and the usage of the NSC), however, the NSC was only stored in the volatile memory of the UE and any updates of the NSC or operations involving the NSC have been performed by accessing only the volatile memory of the UE.

It is apparent that this has significant advantages for the testing procedure to be carried out before shipping of the UE. Since any operations involving the NSC (except the initial copying during boot and final copying during shutdown) only are using the volatile memory of the UE, the testing of these operations has only to be performed once and not twice, despite the two possible operation scenarios, one with an old USIM and one with a USIM according to the new standard. During the testing procedure a "double testing" has to be performed only for a very limited set of operations, namely only for the readout of the NSC from the non-volatile memory of the UE and from the USIM needs to be tested, as well as the saving of an updated NSC to the USIM and the saving of an updated NSC to the non-volatile memory of the UE. However, for all the operations involving the usage and updates of the NSC no double testing is necessary, all these operations can be tested by making usage of the volatile memory of the UE.

This significantly reduces the test efforts while still maintaining standard conformity.

It will be apparent for the skilled person that the embodiments which have been described in the foregoing may be modified while still making use of the basic ideas of the present invention. In particular, the parameter set which is stored either in the USIM or the non-volatile memory may not only be the NAS security context, it may be any security context or set of security relevant parameters which are used to secure the communication between a mobile device and its network to which it is connected. In particular this may relate to sets of one or more keys or one or more counters used to maintain security. In addition, this principle may also be used to handle mobility management parameters. For example, instead of a set of security parameters the invention may be applied to mobility management parameters. For example in one embodiment the so-called enhanced mobility management (EMM) parameters in a mobile system may be used instead of the set of security parameters. In such a case the principles of operation are the same as described in connection with the previous embodiments except that instead of a set of security parameters a set of mobility management parameters is used.

It will be understood by the skilled person that the embodiments described hereinbefore may be implemented by hardware, by software, or by a combination of software and hardware. The modules and functions described in connection with embodiments of the invention may be as a whole or in part implemented by microprocessors or computers which are suitably programmed such as to act in accordance with the methods explained in connection with embodiments of the invention. An apparatus implementing an embodiment of the invention may e.g. comprise a computer, a PDA, a mobile phone, a smartphone, or anything alike.

## Claims

1. A method of handling a set of parameters which is used in the communication between a mobile device and the network to which the mobile device is connected, wherein said mobile device comprises a non-removable non-volatile memory and further a removable non-volatile memory, said removable non-volatile memory being a subscriber identification module which either is configured to store said set of parameters in a prescribed location or is not configured to store said set of parameters in a prescribed location, said method **characterized by**:
when said mobile device is switched on, checking whether the subscriber identification module is configured to store said set of parameters, and then if yes by copying the set of parameters from the subscriber identification module to the volatile memory of said mobile device or otherwise copying the set of parameters from the non-removable non-volatile memory of said mobile device to the volatile memory of said mobile device;
during further operation of said mobile phone, using the set of parameters which are stored in the volatile memory of said mobile device for communication with said network and for updating said parameters, wherein if said parameters are updated the updated parameters are again stored in said volatile memory;
after a shutdown request, storing the set of parameters onto the non-removable non-volatile memory of said mobile device or, if the subscriber identification module is configured to store said set of parameters in a prescribed location, storing them into said prescribed location of said subscriber identification module, so that while said mobile device is in a switched-off state, said set of parameters is stored in said subscriber identification module or, if the subscriber identification module is not configured to store said set of parameters in a prescribed location, said set of parameters is stored in the non-removable non-volatile memory of said mobile device.

2. The method of claim 1, wherein said set of parameters is one or more of the following:
a set of security parameters which secure the communication between a mobile device and the network to which the mobile device is connected; or
a set of mobility management parameters.

3. The method of claim 1 or 2, further comprising:
after having copied the parameters to the volatile memory of the mobile device, deleting the parameters from the location in the non-volatile memory from which they have been copied.

4. The method of claim 1,2 or 3, further comprising:
after having copied the parameters to the volatile memory of the mobile device, setting an indicator or a flag which indicates that the parameters stored in the location from where they were copied to the volatile memory of the mobile device are invalid.

5. The method of one of claims 1 to 4, further comprising:
after having copied the parameters from the volatile memory of the mobile device to either the non-volatile memory of said mobile device or, if the subscriber identification module is configured to store said set of parameters in a prescribed location, to said subscriber identification module:
ensuring that a flag or indicator which indicates whether the parameters stored in the non-volatile memory of the mobile device or the subscriber identification module indicates the parameters stored therein as being valid.

6. The method of one of the preceding claims, further comprising:
generating a prescribed location for storing the parameters in the non-volatile memory of said mobile device, if a check whether such a prescribed location in the subscriber identification module and in the non-volatile memory of said mobile device exists is negative.

7. The method of one of the preceding claims, further comprising:
if after switching on said mobile device it is detected that no parameters are stored in said subscriber identification module and the non-volatile memory of said mobile device, negotiating parameters between said mobile device and the network to which it is connected so that the thus negotiated parameters can be used during operation of said mobile device and before shutdown are stored on the non-volatile memory of said mobile device or, if the subscriber identification module is configured to store said set of parameters in a prescribed location, in said subscriber identification module.

8. The method of one of the preceding claims, further comprising:
if after switching on said mobile device it is detected that the parameters stored in said subscriber identification module and/or the non-volatile memory of said mobile device are marked as invalid by a flag or an indicator, negotiating parameters between said mobile device and the network to which it is connected so that the thus negotiated parameters can be used during operation of said mobile device and before shutdown are stored on the non-volatile memory of said mobile device or, if the subscriber identification module is configured to store said set of parameters in a prescribed location, in said subscriber identification module.

9. A mobile device configured to handle a set of parameters which is used in the communication between a mobile device and the network to which the mobile device is connected, wherein said mobile device comprises a non-removable non-volatile memory and further a removable non-volatile memory, said removable non-volatile memory being a subscriber identification module which either is configured to store said set of parameters in a prescribed location or is not configured to store said set of parameters in a prescribed location, said mobile device **characterized by**:
a module for, when said mobile device is switched on, checking whether the subscriber identification module is configured to store said set of parameters, and then if yes by copying the set of parameters from the subscriber identification module to the volatile memory of said mobile device or otherwise copying the set of parameters from the non-removable non-volatile memory of said mobile device to the volatile memory of said mobile device;
a module for, during further operation of said mobile phone, using the set of parameters which are stored in the volatile memory of said mobile device for communication with said network and for updating said parameters, wherein if said parameters are updated the updated parameters are again stored in said volatile memory;
a module for, after a shutdown request, storing the set of parameters onto the non-removable non-volatile memory of said mobile device or, if the subscriber identification module is configured to store said set of parameters in a prescribed location, storing them into said prescribed location of said subscriber identification module, so that while said mobile device is in a switched-off state, said set of parameters is stored in said subscriber identification module or, if the subscriber identification module is not configured to store said set of parameters in a prescribed location, said set of parameters is stored in the non-removable non-volatile memory of said mobile device.

10. The mobile device of claim 9, wherein said set of parameters is one or more of the following:
a set of security parameters which secure the communication between a mobile device and the network to which the mobile device is connected; or
a set of mobility management parameters.

11. The mobile device of claim 9 or 10, further comprising:
a module for, after having copied the parameters to the volatile memory of the mobile device, deleting the parameters from the location in the non-volatile memory from which they have been copied.

12. The mobile device of claim 9, 10 or 11, further comprising:
a module for, after having copied the parameters to the volatile memory of the mobile device, setting an indicator or a flag which indicates that the parameters stored in the location from where they were copied to the volatile memory of the mobile device are invalid.

13. The mobile device of one of claims 9 to 12, further comprising:
a module for performing, after having copied the parameters from the volatile memory of the mobile device to either the non-volatile memory of said mobile device or, if the subscriber identification module is configured to store said set of parameters in a prescribed location, to said subscriber identification module, the following operations:
ensuring that a flag or indicator which indicates whether the parameters stored in the non-volatile memory of the mobile device or the subscriber identification module indicates the parameters stored therein as being valid.

14. The mobile device of one of claims 9 to 13, further comprising:
a module for carrying out the operations as defined in one of claims 6 to 8.

15. A computer program comprising computer program code which when being executed on a computer enables said computer to perform a method in accordance with one of claims 1 to 8.

## Patentansprüche

1. Ein Verfahren zum Bearbeiten eines Satzes von Parametern, die in der Kommunikation zwischen einem mobilen Gerät und dem Netzwerk, mit dem das mobile Gerät verbunden ist, verwendet werden, wobei das mobile Gerät einen nicht-entfernbaren nicht-flüchtigen Speicher aufweist und ferner einen entfernbaren nicht-flüchtigen Speicher, wobei der entfernbare nicht-flüchtige Speicher ein Subscriber-Identification-Modul ist, das entweder konfiguriert ist, um den Satz von Parametern an einem vorgeschriebenen Ort zu speichern oder nicht konfiguriert ist, den Satz von Parametern in einem vorgeschriebenen Ort zu speichern, wobei das Verfahren **gekennzeichnet ist durch**:
wenn das mobile Gerät eingeschaltet wird, Überprüfen, ob das Subscriber-Identification-Modul konfiguriert ist, um den Satz von Parametern zu speichern, und dann, falls ja, Kopieren des Satzes von Parametern von dem Subscriber-Identification-Modul zu dem flüchtigen Speicher des mobilen Geräts oder anderenfalls Kopieren des Satzes von Parametern von dem nicht-entfernbaren nicht-flüchtigen Speicher des mobilen Geräts zu dem flüchtigen Speicher des mobilen Geräts;
während des weiteren Betriebs des mobilen Telefons, Verwenden des Satzes von Parametern, der in dem flüchtigen Speicher des mobilen Geräts gespeichert ist, mit dem Netzwerk und zum Updaten der Parameter, wobei, falls die Parameter upgedatet werden, die upgedateten Parameter wieder in dem flüchtigen Speicher gespeichert werden;
nach einer Abschalt-Anforderung, Speichern des Satzes von Parametern auf dem nicht-entfernbaren nicht-flüchtigen Speicher des mobilen Geräts, oder, falls das Subscriber-Identification-Modul konfiguriert ist, den Satz von Parametern an einem vorbestimmten Ort zu speichern, Speichern von ihnen in dem vorbestimmten Ort des Subscriber-Identification-Moduls, so dass während das mobile Gerät in einem abgeschalteten Zustand ist, der Satz von Parametern in dem Subscriber-Identification-Modul gespeichert wird oder, falls das Subscriber-Identification-Modul nicht konfiguriert ist, den Satz von Parametern an einem vorbestimmten Ort zu speichern, der Satz von Parametern in dem nicht-entfernbaren nicht-flüchtigen Speicher des mobilen Geräts gespeichert wird.

2. Verfahren nach Anspruch 1, wobei der Satz von Parametern ein oder mehreres von den Folgenden ist:
ein Satz von Sicherheitsparametern, die die Sicherheit zwischen dem mobilen Gerät und dem Netzwerk, mit dem das mobile Gerät verbunden ist, absichern; oder
ein Satz von Mobility-Management-Parametern.

3. Das Verfahren nach Anspruch 1 oder 2, ferner aufweisend:
nachdem die Parameter zu den flüchtigen Speichern des mobilen Geräts kopiert wurden, löschen der Parameter von dem Ort in dem nicht-flüchtigen Speicher, von dem sie kopiert wurden.

4. Das Verfahren nach Anspruch 1, 2 oder 3, ferner aufweisend:
nachdem die Parameter zu dem flüchtigen Speicher des mobilen Geräts kopiert wurden, Setzen eines Indikators oder eines Flags, das angibt, dass die Parameter, die an dem Ort, von dem sie zu dem flüchtigen Speicher des Geräts kopiert wurden, gespeichert sind, ungültig sind.

5. Das Verfahren nach einem der Ansprüche 1 bis 4, ferner aufweisend:
nachdem die Parameter von dem flüchtigen Speicher des mobilen Geräts zu entweder dem nicht-flüchtigen Speicher des mobilen Geräts oder, falls das Subscriber-Identification-Modul konfiguriert ist, den Satz von Parametern an einem vorbestimmten Ort zu speichern, zu dem Subscriber-Identification-Modul kopiert wurden;
Sicherstellen, dass ein Flag oder Indikator, der angibt, ob die in dem nicht-flüchtigen Speicher des mobilen Geräts des Subscriber-Identifieation-Moduls gespeicherten Parameter angeben, dass die darin gespeicherten Parameter gültig sind.

6. Das Verfahren nach einem der vorhergehenden Ansprüche, ferner aufweisend:
Erzeugen eines vorbestimmten Orts zum Speichern der Parameter in dem nicht-flüchtigen Speicher des mobilen Geräts, falls eine Überprüfung, ob ein solcher vorgeschriebener Ort in dem Subscriber-Identification-Modul und in dem nicht-flüchtigen Speicher des mobilen Geräts existiert, negativ ist.

7. Das Verfahren nach einem der vorhergehenden Ansprüche, ferner aufweisend:
falls nach Einschalten des mobilen Geräts festgestellt wird, dass keine Parameter in dem Subscriber-Identification-Modul und dem nicht-flüchtigen Speicher des mobilen Geräts gespeichert sind, Verhandeln von Parametern zwischen dem mobilen Gerät und dem Netzwerk, mit dem es verbunden ist, so dass die **dadurch** verhandelten Parameter während des Betriebs des mobilen Geräts verwendet werden können und vor dem Ausschalten auf den nicht-flüchtigen Speicher des mobilen Geräts gespeichert werden oder, falls das Subscriber-Identification-Modul konfiguriert ist, den Satz von Parametern an einem vorbestimmten Ort zu speichern, in dem Subscriber-Identification-Modul.

8. Das Verfahren nach einem der vorhergehenden Ansprüche, ferner aufweisend:
falls nach dem Einschalten des mobilen Geräts festgestellt wird, dass die in dem Subscriber-Identification-Modul und/oder dem nicht-flüchtigen Speicher des mobilen Geräts gespeicherten Parameter durch ein Flag oder einen Indikator als ungültig markiert sind, Verhandeln von Parametern zwischen dem mobilen Gerät und dem Netzwerk, mit dem es verbunden ist, so dass die dann verhandelten Parameter während des Betriebs des mobilen Geräts verwendet werden können und vor dem Abschalten auf dem nicht-flüchtigen Speicher des mobilen Geräts gespeichert werden oder, falls das Subscriber-Identification-Modul konfiguriert ist, den Satz von Parametern an einem vorbestimmten Ort zu speichern in dem Subscriber-Idenfrfication-Modul.

9. Ein mobiles Gerät, das konfiguriert ist, einen Satz von Parametern, der in der Kommunikation zwischen einem mobilen Gerät und dem Netzwerk, mit dem das mobile Gerät verbunden ist, verwendet wird, zu verarbeiten, wobei das mobile Gerät einen nicht-entfernbaren nicht-flüchtigen Speicher und ferner einen entfernbaren nicht-flüchtigen Speicher aufweist, wobei der entfernbare nicht-flüchtige Speicher ein Subscriber-Identification-Modul ist, das entweder konfiguriert ist, den Satz von Parametern an einem vorbestimmten Ort zu speichern oder nicht konfiguriert ist, den Satz von Parametern an einem vorbestimmten Ort zu speichern, wobei das mobile Gerät **gekennzeichnet ist durch**:
ein Modul um, wenn das mobile Gerät eingeschaltet wird, zu überprüfen, ob das Subscriber-Identification-Modul konfiguriert ist, den Satz von Parametern zu speichern, und dann, falls ja, zum Kopieren des Satzes von Parametern von dem Subscriber-Identification-Modul zu dem flüchtigen Speicher des mobilen Geräts oder, anderenfalls Kopieren des Satzes von Parametern von dem nicht-entfernbaren nicht-flüchtigen Speicher des mobilen Geräts zu dem flüchtigen Speicher des mobilen Geräts;
ein Modul zum, während des weiteren Betriebs des mobilen Telefons, Verwenden des Satzes von Parametern, die in dem flüchtigen Speicher des mobilen Geräts gespeichert sind, zur Kommunikation mit dem Netzwerk und zum Updaten der Parameter, wobei, falls die Parameter upgedatet werden, die upgedateten Parameter wiederum in dem flüchtigen Speicher gespeichert werden;
ein Modul zum, nach einer Ausschalt-Anforderung, Speichern des Satzes von Parametern auf dem nicht-entfernbaren nicht-flüchtigen Speicher des mobilen Geräts oder, falls das Subscriber-Identification-Modul konfiguriert ist, den Satz von Parametern an einem vorbestimmten Ort zu speichern, Speichern von ihnen an dem vorbestimmten Ort des Subscriber-Identification-Moduls, so dass während das mobile Gerät in einem ausgeschalteten Zustand ist, der Satz von Parametern in dem Subscriber-Identification-Modul gespeichert ist oder, falls das Subscriber-Identitication-Modul nicht konfiguriert ist, den Satz von Parametern an einem vorbestimmten Ort zu speichern, der Satz von Parametern in dem nicht-entfernbaren nicht-flüchtigen Speicher des mobilen Geräts gespeichert wird.

10. Das mobile Gerät nach Anspruch 9, wobei der Satz von Parametern ein oder mehreres von dem Folgenden ist;
ein Satz von Sicherheitsparametern, die die Sicherheit zwischen dem mobilen Gerät und dem Netzwerk, mit dem das mobile Gerät verbunden ist, Absichern; oder
ein Satz von Mobility-Management-Parametern.

11. Das mobile Gerät nach Anspruch 9 oder 10, ferner aufweisend:
ein Modul zum, nachdem die Parameter zu dem flüchtigen Speicher des mobilen Geräts kopiert wurden, Löschen der Parameter von dem Ort in dem nicht-flüchtigen Speicher, von dem sie kopiert wurden.

12. Das mobile Gerät nach Anspruch 9, 10 oder 11, ferner aufweisend:
ein Modul zum, nachdem die Parameter zu dem flüchtigen Speicher des mobilen Geräts kopiert wurden, Setzen eines Indikators oder eines Flags, der angibt, dass die Parameter, die an einem Ort gespeichert sind, von dem sie zu dem flüchtigen Speicher des mobilen Geräts kopiert wurden, ungültig sind.

13. Das mobile Gerät nach einem der Ansprüche 9 bis 12, ferner aufweisend:
ein Modul zum Durchführen der folgenden Operationen, nachdem die Parameter von dem flüchtigen Speicher des mobilen Geräts zu entweder dem nicht-flüchtigen Speicher des mobilen Geräts oder, falls das Subscriber-Identification-Modul konfiguriert ist, den Satz von Parametern an einem vorbestimmten Ort zu speichern, zu dem Subscriber-Identification-Modul kopiert wurden:
Sicherstellen, dass ein Flag oder Indikator, der angibt, ob die Parameter, die in dem flüchtigen Speicher des mobilen Geräts oder dem Subscriber-Identification-Modul gespeichert sind, angibt, dass die darin gespeicherten Parameter gültig sind.

14. Das mobile Gerät nach einem der Ansprüche 9 bis 13, ferner aufweisend:
ein Modul zum Ausrühren der Operationen wie definiert in einem der Ansprüche 6 bis 8.

15. Ein Computerprogramm aufweisend Computerprogrammcode, der, wenn er ausgeführt wird auf einem Computer den Computer in die Lage versetzt, ein Verfahren gemäß einem der Ansprüche 1 bis 8 auszuführen.

## Revendications

1. Procédé permettant de gérer un jeu de paramètres qui est utilisé dans la communication entre un dispositif mobile et le réseau auquel le dispositif mobile est connecté, dans lequel ledit dispositif mobile comprend une mémoire non volatile non amovible et en outre une mémoire non volatile amovible, ladite mémoire non volatile amovible étant un module d'identification d'abonné qui, soit est configuré pour stocker ledit jeu de paramètres dans un emplacement prescrit, soit n'est pas configuré pour stocker ledit jeu de paramètres dans un emplacement prescrit, le procédé étant **caractérisé par** :
lorsque ledit dispositif mobile est allumé, vérifier si le module d'identification d'abonné est configuré pour stocker ledit jeu de paramètres, et si oui, copier le jeu de paramètres depuis le module d'identification d'abonné vers la mémoire volatile dudit dispositif mobile, ou sinon copier le jeu de paramètres depuis la mémoire non volatile non amovible dudit dispositif mobile vers la mémoire volatile dudit dispositif mobile ;
pendant un fonctionnement supplémentaire dudit téléphone mobile, utiliser le jeu de paramètres qui est stocké dans la mémoire volatile dudit dispositif mobile pour une communication avec ledit réseau et pour une mise à jour desdits paramètres, où si lesdits paramètres sont mis à jour, les paramètres mis à jour sont encore stockés dans ladite mémoire volatile ;
après une demande d'arrêt, stocker le jeu de paramètres sur la mémoire non volatile non amovible dudit dispositif mobile ou, si le module d'identification d'abonné est configuré pour stocker ledit jeu de paramètres dans un emplacement prescrit, le stocker dans l'emplacement prescrit dudit module d'identification d'abonné, de sorte que pendant que ledit dispositif mobile est dans un état éteint, ledit jeu de paramètres est stocké dans ledit module d'identification d'abonné ou, si le module d'identification d'abonné n'est pas configuré pour stocker ledit jeu de paramètres dans un emplacement prescrit, ledit jeu de paramètres est stocké dans la mémoire non volatile non amovible dudit dispositif mobile.

2. Procédé selon la revendication 1, dans lequel ledit jeu de paramètres est un ou plusieurs des éléments suivants :
un jeu de paramètres de sécurité qui sécurise la communication entre un dispositif mobile et le réseau auquel le dispositif mobile est connecté, ou
un jeu de paramètres de gestion de mobilité.

3. Procédé selon la revendication 1 ou 2, comprenant en outre :
après avoir copié les paramètres sur la mémoire volatile du dispositif mobile, effacer les paramètres de l'emplacement dans la mémoire non volatile à partir duquel ils ont été copiés.

4. Procédé selon la revendication 1, 2 ou 3, comprenant en outre :
après avoir copié les paramètres sur la mémoire volatile du dispositif mobile, établir un indicateur ou un drapeau qui indique que les paramètres stockés dans l'emplacement à partir duquel ils ont été copiés vers la mémoire volatile du dispositif mobile sont invalides.

5. Procédé selon l'une quelconque des revendications 1 à 4, comprenant en outre :
après avoir copié les paramètres depuis la mémoire volatile du dispositif mobile vers soit la mémoire non volatile dudit dispositif mobile soit, si le module d'identification de l'abonné est configuré pour stocker ledit jeu de paramètres dans un emplacement prescrit, vers le module d'identification de l'abonné :
assurer que le drapeau ou indicateur qui indique si les paramètres stockés dans la mémoire non volatile du dispositif mobile ou dans le module d'identification d'abonné, signale les paramètres stockés là comme étant valides.

6. Procédé selon l'une quelconque des revendications précédentes, comprenant en outre :
générer un emplacement prescrit permettant de stocker les paramètres dans la mémoire non volatile dudit dispositif mobile, si une vérification de l'existence de cet emplacement prescrit dans le module d'identification de l'abonné et dans la mémoire non volatile dudit dispositif mobile est négative.

7. Procédé selon l'une quelconque des revendications précédentes, comprenant en outre :
si après le démarrage dudit dispositif mobile, il est détecté qu'aucun paramètre n'est stocké dans ledit module d'identification d'abonné ni la mémoire non volatile dudit dispositif mobile, négocier des paramètres entre ledit dispositif mobile et le réseau auquel il est connecté de sorte que les paramètres ainsi négociés puissent être utilisés pendant le fonctionnement dudit dispositif mobile et qu'avant l'arrêt ils soient stockés dans la mémoire non volatile dudit dispositif mobile ou, si le module d'identification de l'abonné est configuré pour stocker ledit jeu de paramètres dans un emplacement prescrit, dans ledit module d'identification de l'abonné.

8. Procédé selon l'une quelconque des revendications précédentes, comprenant en outre :
si après le démarrage dudit dispositif mobile, ils est détecté que les paramètres stockés dans ledit module d'identification d'abonné et/ou la mémoire non volatile dudit dispositif mobile sont marqués comme invalides par un drapeau ou un indicateur, négocier des paramètres entre ledit dispositif mobile et le réseau auquel il est connecté de sorte que les paramètres ainsi négociés puissent être utilisés pendant le fonctionnement dudit dispositif mobile et qu'avant l'arrêt ils soient stockés dans la mémoire non volatile dudit dispositif mobile ou, si le module d'identification de l'abonné est configuré pour stocker ledit jeu de paramètres dans un emplacement prescrit, dans ledit module d'identification de l'abonné.

9. Dispositif mobile configuré pour gérer un jeu de paramètres qui est utilisé dans la communication entre un dispositif mobile et le réseau auquel le dispositif mobile est connecté, dans lequel ledit dispositif mobile comprend une mémoire non volatile non amovible et en outre, une mémoire non volatile amovible, ladite mémoire non volatile amovible étant un module d'identification d'abonné qui, soit est configuré pour stocker ledit jeu de paramètres dans un emplacement prescrit, soit n'est pas configuré pour stocker ledit jeu de paramètres dans un emplacement prescrit, ledit dispositif mobile étant **caractérisé en ce que** :
un module permettant, lorsque ledit dispositif mobile est allumé, de vérifier si le module d'identification d'abonné est configuré pour stocker ledit jeu de paramètres, et si oui, copier le jeu de paramètres depuis le module d'identification d'abonné vers la mémoire volatile dudit dispositif mobile, ou sinon copier le jeu de paramètres depuis la mémoire non volatile non amovible dudit dispositif mobile vers la mémoire volatile dudit dispositif mobile ;
un module permettant, pendant un fonctionnement supplémentaire dudit téléphone mobile, d'utiliser le jeu de paramètres qui est stocké dans la mémoire volatile dudit dispositif mobile pour une communication avec ledit réseau et pour mettre à jour lesdits paramètres, où si lesdits paramètres sont mis à jour, les paramètres mis à jour sont encore stockés dans ladite mémoire volatile ;
un module permettant, après une demande d'arrêt, de stocker le jeu de paramètres sur la mémoire non volatile non amovible dudit dispositif mobile ou, si le module d'identification d'abonné est configuré pour stocker ledit jeu de paramètres dans un emplacement prescrit, le stocker dans ledit emplacement prescrit dudit module d'identification d'abonné, de sorte que pendant que ledit dispositif mobile est dans un état éteint, ledit jeu de paramètres est stocké dans ledit module d'identification d'abonné ou, si le module d'identification d'abonné n'est pas configuré pour stocker ledit jeu de paramètres dans un emplacement prescrit, ledit jeu de paramètres est stocké dans la mémoire non volatile non amovible dudit dispositif mobile.

10. Dispositif mobile selon la revendication 9, dans lequel ledit jeu de paramètres est un ou plusieurs des éléments suivants :
un jeu de paramètres de sécurité qui sécurise la communication entre un dispositif mobile et le réseau auquel le dispositif mobile est connecté, ou
un jeu de paramètres de gestion de mobilité.

11. Dispositif mobile selon la revendication 9 ou 10, comprenant en outre :
un module permettant, après avoir copié les paramètres vers la mémoire volatile du dispositif mobile, d'effacer les paramètres de l'emplacement dans la mémoire non volatile depuis lequel ils ont été copiés.

12. Dispositif mobile selon la revendication 9, 10 ou 11, comprenant en outre :
un module permettant, après avoir copié les paramètres vers la mémoire volatile du dispositif mobile, d'établir un indicateur ou drapeau qui indique que les paramètres stockés dans l'emplacement d'où ils ont été copiés vers la mémoire volatile, sont invalides.

13. Dispositif mobile selon l'une quelconque des revendications 9 à 12, comprenant en outre :
un module permettant, après avoir copié les paramètres depuis la mémoire volatile du dispositif mobile soit vers la mémoire non volatile dudit dispositif mobile soit, si le module d'identification d'abonné est configuré pour stocker ledit jeu de paramètres dans un emplacement prescrit, vers ledit module d'identification d'abonné, d'effectuer les opérations suivantes :
assurer qu'un drapeau ou indicateur qui indique si les paramètres stockés dans la mémoire non volatile du dispositif mobile ou dans le module d'identification d'abonné, signale les paramètres stockés là comme étant valides.

14. Dispositif mobile selon l'une quelconque des revendications 9 à 13, comprenant en outre :
un module permettant de réaliser les opérations telles que définies dans l'une des revendications 6 à 8.

15. Programme informatique comprenant un code de programme informatique qui, lorsqu'il est exécuté sur un ordinateur, permet audit ordinateur de mettre en oeuvre un procédé en conformité avec l'une quelconque des revendications 1 à 8.
